# EUROPEAN PATENT APPLICATION

(11) **EP 1 189 165 A2**
(43) Date of publication of application: **20.03.2002**
(21) Application number: 01305893.8
(22) Date of filing: 09.07.2001
(51) Int. Cl.: G06F 17/60

(54) **System and method for facilitating trusted transactions between businesses**

(30) Priority: 03.04.2001 US 825415; 08.09.2000 US 231137 P
(71) Applicant: S.W.I.F.T. sc, 1310 La Hulpe (BE)
(72) Inventor: Haughan, Brian, 3090 Overijse (BE); Verhanneman, Willy, 3001 Heverlee (BE)
(74) Representative: Lloyd, Patrick Alexander Desmond

(57) **Abstract**

In an e-commerce system, on-line assurances of party identity or other parameters can be obtained from financial institutions acting as assurors. A signed message is sent from a sending party via an intermediate service provider. The intermediate party obtains the identity of the receiver and receiver's assuror from the receiving party and the obtaining assurances from both the sending and receiving party assurors. The assured message is then sent to the receiving party who replies with a receipt which is sent from the intermediate party to the sending party as an assured receipt. The intermediate party plays no part in the underlying business transaction.

## Description

### FIELD OF THE INVENTION

This invention relates to a system and method for facilitating transactions between businesses. In particular, it is concerned with the provision of on-line guarantees or assurances by companies engaged in business-to-business (B2B) e-commerce, although it is also applicable to consumer-to-business e-commerce (C2B).

### BACKGROUND TO THE INVENTION

When two companies transact over a network such as the Internet, some messages that are exchanged require guarantees or assurances. A guarantee or assurance is an obligation on behalf of one party to fulfil a commitment or an instruction: messages which represent such a commitment or instruction must be guaranteed. As a simple example, a receiver needs an assurance about a sender's identity and the time and date a message was sent.

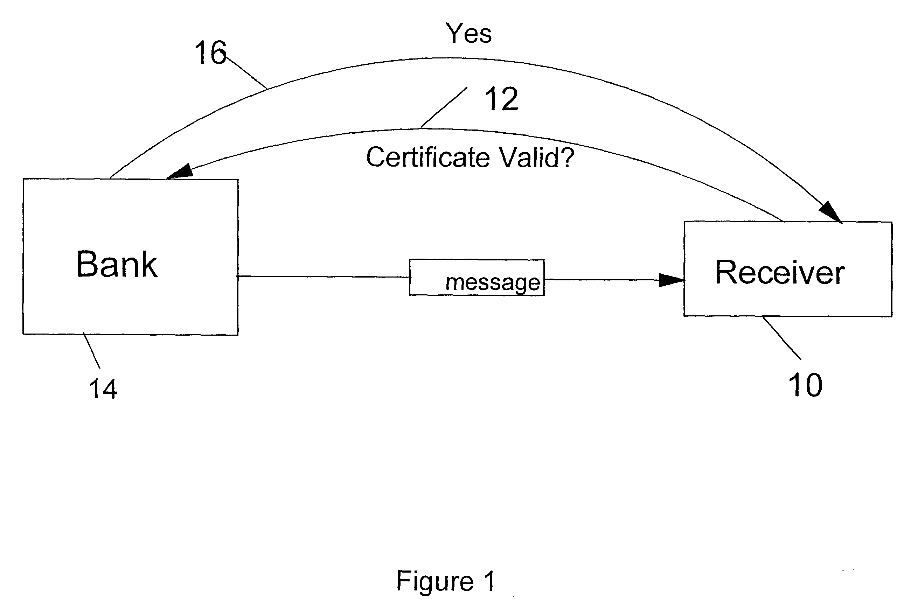

In business-to-business (B2B) transactions, companies could rely on their financial institutions to provide such assurances. Financial institutions already provide loans and financial assurances to customers. Figure 1 illustrates a scenario where a receiver 10 obtains an assurance by sending a 'certificate valid?' message 12 to the financial institution 14 who issued the sender's certificate, the financial institution then sends the assurance message 16 back to the receiver. This is disadvantageous as it requires extra work by the receiver who also may not have a relationship with the financial institution. It is also disadvantageous as the natural message flow is between the receiver and sender which is interrupted to allow the financial institution to validate a certificate.

### SUMMARY OF THE INVENTION

The present invention aims to overcome the abovementioned disadvantages with the prior art method and apparatus.

In accordance with the invention, this aim is met by a system in which an assurance is integrated with the message sent to the receiver. This arrangement greatly reduces the amount of messaging required.

The invention is defined by the independent claims to which reference should be made.

In one embodiment of the invention, an intermediate party is arranged between the sending party and the receiving party. The intermediate party receives messages, which may be signed, from the sending party, and obtains an assurance from a sending party assuror. The intermediate party then sends the message, as an assured message, to the receiving party.

In one embodiment, the intermediate party also obtains an assurance from the receiving party assuror. When an assured message is received at the receiving party, a receipt is sent to the intermediate party which sends it as an assured receipt to the sending party.

Preferably, on receipt of a message, the intermediate party logs it, adds a timestamp and reference and verifies any signature. It then determines the sender's identity and its assuror's identity.

Preferably, assuring messages, that is those from the assurance provider, are logged before they are sent to the receiving party. The receipts are also logged before being sent by the intermediate party as assured receipts.

Embodiments of the invention have the advantage that message flow is greatly simplified. The assurances are integrated with the messaging, not requested as a separate action. They have the further advantage that customers can obtain on-line assurances for e-commerce transactions from financial institutions.

A preferred embodiment has the further advantage that the intermediate party, through its logging, timestamping and referencing of messages, can provide an on-line notarisation enabling resolution of disputes between parties.

### BRIEF DESCRIPTION OF THE DRAWINGS

Embodiments of the invention will now be described, by way of example only, and with reference to the accompanying drawings in which:
Figure 1 is an overview of a known model for providing assurances;
Figure 2 is an overview of the model for providing assurances adopted by the present invention;
Figure 3 illustrates the contractual relationship between parties to an exchange of messaging;
Figure 4 illustrates the levels of contractual relationships in the system;
Figure 5 illustrates the message flow in a system embodying the present invention;
Figure 6 is a schematic view of the topology of a system embodying the invention.

### DESCRIPTION OF PREFERRED EMBODIMENT

Referring to the figures, the purpose of the system is to facilitate trusted business-to-business (B2B) e-commerce by enabling businesses to obtain on-line assurances from their financial institution(s). Banks or other financial institutions can use the system to be described to provide on-line assurances and e-trust services to corporate customers who subscribe to the system. Although the following description is limited to a B2B application, the invention may also be applied to a consumer-to-business (C2B) system.

The system to be described operates over a communications network, preferably a combination of the Internet and a private network. In essence it is a messaging service which adds assurances to e-commerce messages, enabling trusted e-commerce.

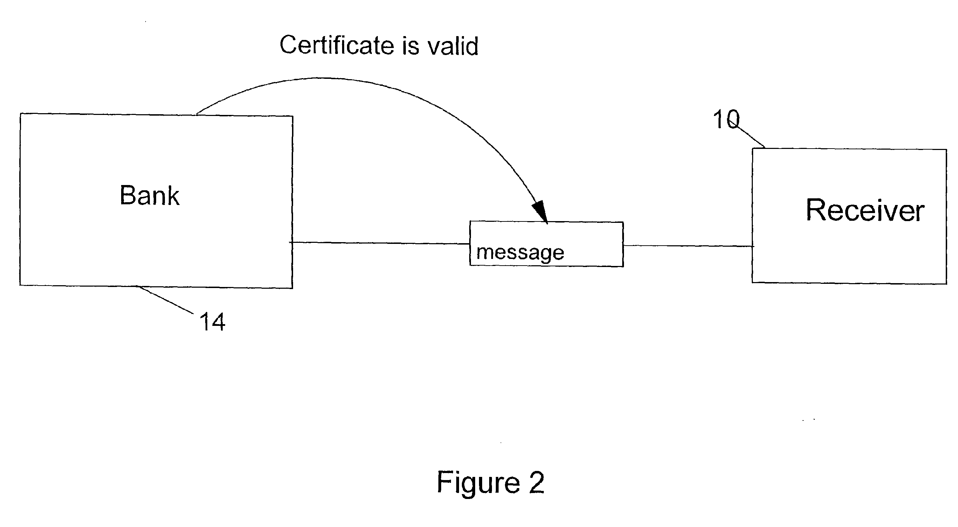

The system to be described operates on the principle that assurances are attached before they are received by a receiver. Preferably, assurances are added both to the sender and receiver. The receiver's assuror may also be involved. This is illustrated in Figure 2, very schematically, in which the financial institution is shown at 14 and the receiver at 10.

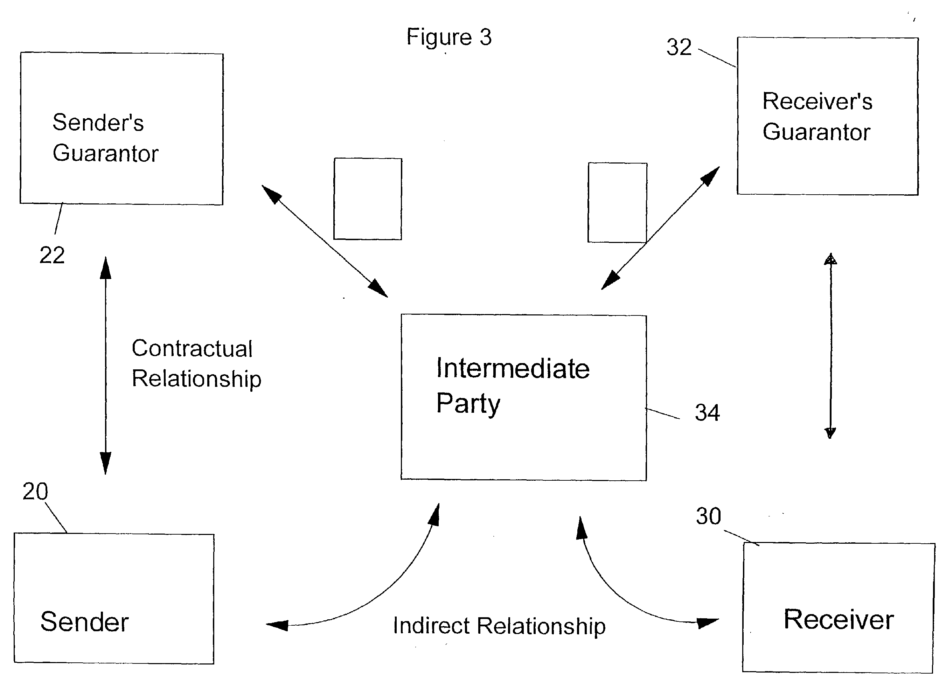

Figure 3 shows the contractual relationship between the various parties to a transaction. The sender 20 and receiver 30 each have a contractual relationship with their own assurors, 22 and 32. Assurances can be exchanged by the assurors through a third party 34 establishing an indirect relationship between the sender and the receiver. Such an arrangement may be used to provide more than the provision of identity assurances and may extend to the provision of on-line notarisation, a legal framework that makes messages binding, and guarantees such as the ability to pay. The system operates by providing an assurance service to which financial institutions sign up as assurors and businesses sign up as customers.

Messages exchanged between senders and receivers may be made legally binding by establishing contractual relationships between senders, receivers and their banks, and by establishing contractual relationships between the financial institutions and the service provider 34. Message exchange also takes place under the terms of Contract Law.

The contractual relationship between subscribers and assurors will set out details of service levels, prices, procedures and other factors determining the provision of assurance services as the assuror to the subscriber. It may refer to a Certification Practices Statement.

The contractual relationship between the assurors and the service providers defines service levels between the service provider and the assurors as well as defining the service levels the guarantor can promise to provide the subscribers.

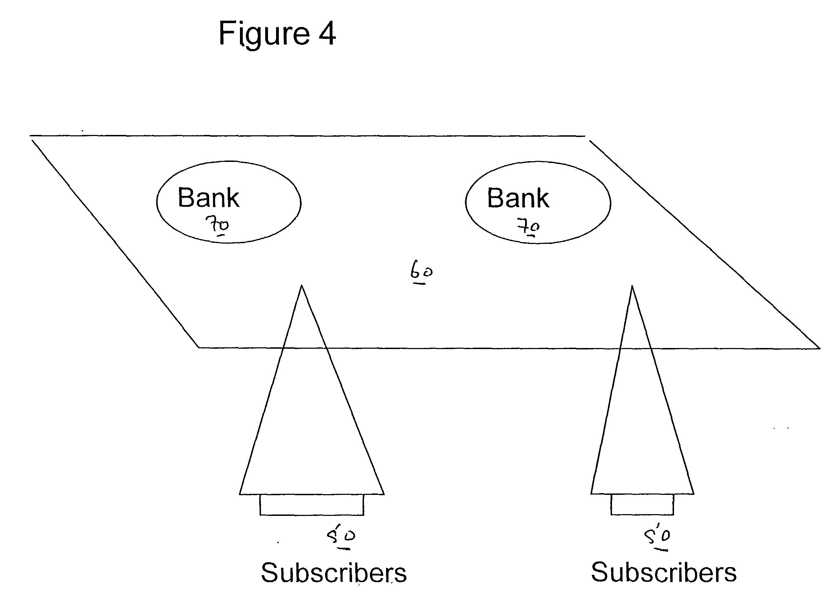

This two tier contractual relationship is illustrated in figure 4 with the subscriber shown at 50, the service provider at 60 and the assurors at 70.

Each of the levels of contract may refer to a rulebook established by the service provider to which the parties are then bound. Thus, the assurors have an explicit relationship with the service provider 34 and an implied relationship with other assurors who have a contractual relationship with the service provider.

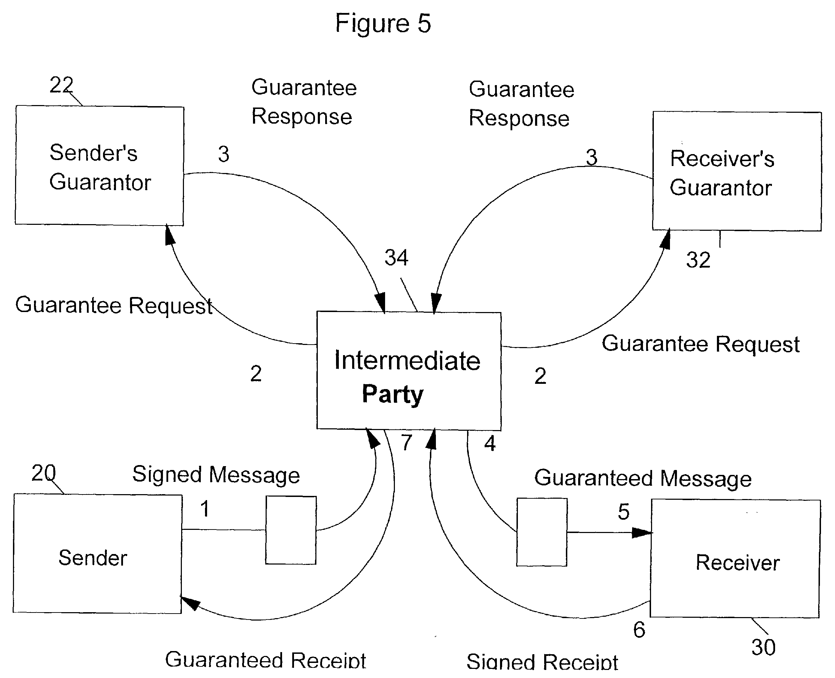

Referring to figure 5, the message flow in a transaction will now be described.

The purpose of the following sequence is for the sender to send a signed message to a receiver which is received by the receiver as an assured message who returns a receipt which is received by the sender as an assured receipt.

The first stage is for the sender to send a signed message to the service provider. In figure 5 this is shown by pathway 1. The signed message requires a financial institution's assurance and is created by any suitable application at the sender, for example a browser or an ERP system which signs the message and sends it to the service provider.

At the second stage, the service provider receives the signed message from the sender, logs it and adds to it a timestamp and individual reference number. It then verifies the signature using its public key. The use and verification of signed electronic messages is well understood and will not be described further.

The service provider then interprets the received signed message to determine the sender's identity, its certificate and the identity of the sender's assuror. It then establishes a connection to the receiver to obtain its certificate and its assuror's identity (not shown). The service provider will then send an assurance request to the sender's assuror relative to the sender and to the receiver's assuror relative to the receiver.

These two assurance request messages are shown at 2 in figure 5. Thus, in this stage, the service provider 34 has requested assured identity from the assurors 22,32.

At the next stage, shown as 3 in figure 5, the assurors confirm, respectively, the identity of the sender and receiver to the service provider. The assurors each receive and process the assurance request made by the service provider and send an assurance response back to the service provider.

The service provider then forwards the assured message to the receiver as shown at 4 in figure 5. This can take place once the two assurors have confirmed the assurance. The service provider constructs an assured message using the original signed message and the timestamp and reference number that were applied when the message was received at the service provider. The guaranteed message is first logged and then sent to the receiver.

The receiver, at 5, receives the assured message from the service provider, authenticates the service provider's signature which is attached to the message and can then rely on that message.

The receiver then acknowledges receipt of the message by returning a signed receipt to the service provider, illustrated at 6 in figure 5. The service provider then constructs an assured receipt by adding the assured identity obtained from the receiver's assuror to the signed receipt, logs the assured receipt and forwards it to the initial sender. This step is shown at 7 in figure 5.

From the description given above, it will be appreciated that messages passing through the service provider 34 are timestamped and logged. Timestamping ensures that a message was sent at a universal, commonly accepted time. Logging allows messages to be retrieved at a later date so that disputes can be resolved. Thus, the system and method described can be used to provide an on-line notarisation service.

As mentioned above, the contractual agreement between the various parties may refer to a rulebook. The following description sets out a summary of the major obligations on the subscribers, assurors and service provide that may be required.

### Subscribers

Subscribers are required to manage their keys and security in a responsible manner, for example by maintaining exclusive access to the private key. Senders must send signed messages to the service providers requesting assurances when asked by the receiver and be bound by assured messages forwarded by the service provider to the same extent, and with the same effect of law as if it had existed in a manually signed form. Likewise, receivers must notify the sender when a message must be routed through the service provider, must receive assured messages from the service provider, rely on the sender's identity, public key and signature and promptly return a signed receipt to the sender.

### Assurors

Assurors are required to maintain subscriber records, verify that a sender's private key corresponds to its public key and, preferably, ensure that subscriber identities and public keys are unique. They must revoke a public key when requested by a subscriber. Assurors support subscribers by providing first line support and arbitration in the event of a dispute.

Assurors also confirm or refuse to confirm assurances by receiving an assurance request from the service provider and providing the response in an assurance response to the service provider.

Assurors connect to and communicate with the service provider's server and manage the liability risk of its services.

### Service Provider

The service provider is required to construct and forward assured messages to the receiver by receiving messages from the sender; send assurance requests to the parties' assurors; obtain assurance responses from the assurors; and construct assured messages from the signed message if both assurors confirm the assurances. Furthermore the service provider is required to receive signed receipts from the receiver and construct and forward an assured receipt to the sender. The service provider is obliged to protect the security of its server and ensure that it can operate at all times and produce evidence to assurors in the event of disputes.

It will be appreciated that the obligations set out above are merely one example of how the system can work what the subscribers are required to do with their keys is set out in the contract with the assuror. The role of the service provider may be limited to provide a norm for this contract.

The example described above, and the associated rules, relate specifically to the provision of assured identity by financial institutions. It will be appreciated that the system can be adapted to provide other assurances without departing from the scope of the invention. Examples include the ability to assure payment, account signing authority and creditworthiness. The message flow and rulebooks for each of these may be different.

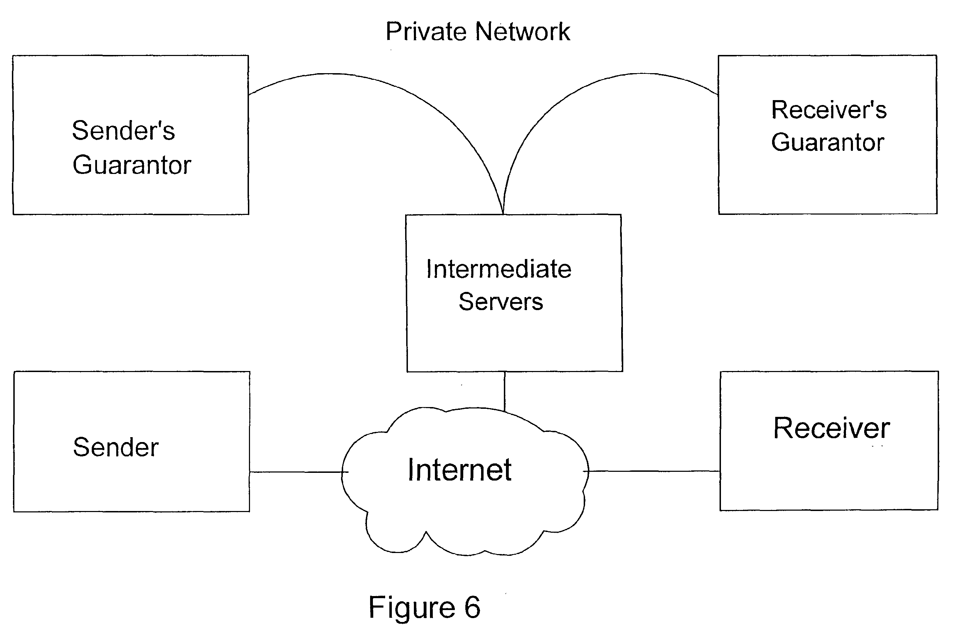

Figure 6 illustrates, schematically, the topology of a preferred implementation of the invention. The service supplier is a server which incorporates a message routing function using Internet protocols. The communications between the assurors and the service provider are preferably across a dedicated communications pathway such as SWIFTNet InterAct. The system supports Identrus compliant X.509v3 certificates and applications. Other certificates and applications may be supported. The communications between the service provider and the subscribers are via the Internet using standard Internet communications protocols. The messages are preferably sent in XML format with the XML envelope embedding the actual message and X.509v3 certificate.

Assurors are required to register and their status must be verified frequently. One way of doing this is to use the Identrus system mentioned in which Indentrus acts as the registrar for assurors.

It will be appreciated from the foregoing that the method and system embodying the invention enable a subscriber to obtain assurances from its financial institution, such as confirmation that a certificate issued by the financial institution and used to sign an e-commerce message is still valid. The counterparty receiving the message has the assurance that the identity of the sender has been verified. The receiver has the additional assurance that the messages have been logged and timestamped by the service provider, which can be relied on in the event of a dispute. The sender has the same benefit as the receiver returns a receipt which is assured by the and logged by the service provider. Businesses may exchange messages over the Internet, or any other communications network via the service provider to enable banks to apply trust, or assurances, to the receiver when the message is on its way to the receiver.

From the point of view of the financial institution, the method and system embodying the invention provide a platform that financial institution can use to provide on-line assurances and e-trust services to corporate customers enabling them to play an active role in B2B e-commerce. The financial institution can maintain a direct relationship with their customers as market, sell and support the system using their own e-trust brand to their customers. Those customers sign an agreement with their financial institution rather than with the service provider. Financial institutions, when requested to, can add assurances to e-commerce messages sent between two businesses, adding value without interrupting the natural message flow.

Various modifications and developments beyond those already mentioned are possible and will occur to those skilled in the art without departing from the spirit and scope of the invention.

## Claims

**1.** A method of sending an electronic message from a sending party to a receiving party, the message being received by the second party with an assurance, the method comprising the steps of:
sending an assurance request from said sending party to an assuror;
attaching an assurance received from the assuror to said message; and forwarding said assured message to said receiving party.

**2.** A method according to claim 1, wherein said step of sending said assurance request from said sending party to an assuror comprises the steps of:
sending said message from said sending party to an intermediate party; and
sending the assurance request from said intermediate party to a sender's assuror.

**3.** A method according to claim 1, wherein prior to said step of sending a message requesting an assurance, said intermediate party performs the steps of:
logging said message from said sending party;
adding a timestamp to said message;
adding a reference to said message; and
verifying said message.

**4.** A method according to claim 3, wherein said message is a message signed with a signature, and the step of verifying said message further comprises verifying the signature.

**5.** A method according to claim 3, wherein said intermediate party performs the further steps of:
determining the assuror's identity;
determining the sending party's identity; and
determining the identity of the receiving party's assuror.

**6.** A method according to claim 5, wherein the step of determining the identities of the receiving party and the receiving party's assuror comprises contacting the receiving party.

**7.** A method according to claim 5, wherein the step of sending said assurance request from the sending party to a assuror further comprises:
sending an assured request message from the intermediate party to the receiving party's assuror.

**8.** A method according to claim 2, wherein the step of sending said message further comprises receiving an assurance from the sender's assuror, and said step of attaching the assurance to the message is performed by the intermediate party.

**9.** A method according to claim 5, wherein the step of sending said message further comprises receiving an assurance from the receiver's assuror.

**10.** A method according to claim 8, wherein the step of attaching the assurance to the message includes attaching a timestamp and reference to the message, said timestamp and reference having been assigned by the intermediate party on receipt of the message from the sender by the intermediate party.

**11.** A method according to claim 10, comprising receiving the assured message at the receiving party from the intermediate party; and verifying a signature applied to the message by the intermediate party.

**12.** A method of sending an assured message from a sending party to a receiving party, the method comprising the steps of:
sending an electronic message from the sending party to an intermediate party;
obtaining an assurance at the intermediate party;
on receipt of the assurance, constructing an assured message from the electronic message and the assurance; sending the assured message from the intermediate party to the receiving party.

**13.** A method according to claim 1 or 12, further comprising sending a receipt from the receiving party to the intermediate party after receipt of the assured message.

**14.** A method according to claim 13, wherein the receipt is a signed receipt.

**15.** A method according to claim 12, comprising forwarding the assured message to the sending party with the assurance received from the receiving party's assuror.

**16.** A method according to claim 12, wherein the message sent
from the sending party includes a signature, comprising: logging the message on receipt at the intermediate party; adding a timestamp and a reference to the message and verifying the signature.

**17.** A method according to claim 16, wherein the step of constructing the assured message uses the received signed message, the timestamp and the reference.

**18.** A method according to claim 13, wherein, when the receipt is received by the intermediate party, the intermediate party sends an assured receipt to the sending party.

**19.** A method according to claim 12, further comprising the step of:
obtaining an assurance from the receiving party assuror by the intermediate party; and wherein the construction and sending of the assured message occurs only when assurances are received from the sending party assuror and the receiving party assuror.

**20.** A method according to claim 19, wherein on receipt of the assured message at the receiving party, the receiving party sends a receipt to the intermediate party, and the intermediate party adds the assurance received from the receiving party's assuror to the receipt to form an assured receipt and sends the assured receipt to the sending party.

**21.** A method according to claim 19, wherein the step of obtaining an assurance from a receiving party assuror by the intermediate party comprises requesting from the receiving party the identity of the receiving party's assuror and sending an assurance request to the receiving party assuror on receipt of the receiving party's identity.

**24.** A method according to claim 23, wherein the message is encrypted using public/private key encryption, further comprising requesting the receiving party's certificate when the assuror identity request is sent.

**22.** A method of providing on-line notarisation for electronic messages sent from a sending party to a receiving party, comprising the steps of:
sending a message from the sending party to an intermediate party;
logging receipt of the message at the intermediate party;
applying a timestamp to the message;
assigning a reference to the message;
obtaining an assurance from a sending party assuror at the intermediate party;
and, on receipt of the assurance, sending an assured message from the intermediate party to the receiving party.

**23.** Apparatus for sending an electronic message from a sending party to a receiving party, the message being received by the receiving party with an assurance, comprising:
a message sending device for sending the message from said sending party to an assuror;
means for attaching an assurance to said message; and
means for forwarding said assured message to said receiving party.

**24.** Apparatus according to claim 23, further including:
an intermediate party; and
means at the intermediate party for sending a message from the intermediate party to a sender's assuror requesting a guarantee.

**25.** Apparatus according to claim 24, wherein the intermediate party comprises:
a logger for logging said message from said sending party;
a timestamper for adding a timestamp to said message;
a reference adder for adding a reference to said message; and
a verifier for verifying the message.

**26.** Apparatus according to claim 25, wherein said message is signed with a signature, and the verifier for said message further comprises means for verifying the signature.

**27.** Apparatus according to claim 25, wherein said intermediate party further comprises a sending party identifier for determining the sending party's identity;
an assuror identifier for determining the assuror's identity; and
a receiving party assuror identifier for determining the identity of the receiving party's assuror.

**28.** Apparatus according to claim 27, wherein the receiving party assuror identifier comprises means for contacting the receiving party.

**29.** Apparatus according to claim 27, wherein the message sending device further comprises:
means for sending an assurance request message from the intermediate party to the receiving party's assuror.

**30.** Apparatus according to claim 24, wherein the message sending device further comprises means for receiving an assurance from the sender's assuror; and said intermediate device includes said means for attaching the assurance to the message is performed by the intermediate party.

**31.** Apparatus according to claim 27, wherein the electronic message sending device further comprises means for receiving a guarantee from the receiver's assuror.

**32.** Apparatus according to claim 30, wherein the means for attaching the assurance to the message includes:
means for attaching a timestamp and reference to the messages, said timestamp and reference having been assigned by the intermediate party on receipt of the message from the sender by the intermediate party.

**33.** Apparatus according to claim 32, comprising a receiving party for receiving the assured message from the intermediate party, the receiving party having a verifier for verifying a signature applied to the message by the intermediate party.

**34.** Apparatus according to claim 23, further comprising a receipt sender of the receiving party for sending a receipt from the receiving party to the intermediate party after receipt of the assured message.

**35.** Apparatus according to claim 34, wherein the intermediate party comprises means for forwarding the assured receipt to the sending party with the assurance received from the receiving party's assuror.

**36.** Apparatus for sending an assured message from a sending party to a receiving party, comprising:
a sending party; an intermediate party; an assuror; and a receiving party:
wherein the sending party comprises a message sender for sending the message to the intermediate party;
the intermediate party comprises means for obtaining an assurance from the sending party assuror; and an assured message forming and sending device for, on receipt of the assurance, constructing an assured message and sending the assured message to the receiving party.

**37.** Apparatus according to claim 36, wherein the message sent from the sending party includes a signature, comprising, at the intermediate party, a message logger for logging the message on receipt, a timestamper for adding a timestamp, a referencer for adding a reference to the message, and a verifier for verifying the signature.

**38.** Apparatus according to claim 37, wherein the guaranteed message constructing device attaches the timestamp generated by the timestamper and the reference generated by the reference to the signed message.

**39.** Apparatus according to claim 36, wherein the intermediate party includes an assured receipt sender for sending an assured receipt to the sending party when a receipt is received from the receiving party.

**40.** Apparatus according to claim 36, wherein the intermediate party further comprises means for obtaining an assurance from a receiving party assuror at the intermediate party; and wherein the means for constructing and sending the assured message constructs and sends the message occurs only when assurances are received from the sending party assuror and the receiving party assuror.

**41.** Apparatus according to claim 40, wherein the receiving party comprises a receipt sender which, on receipt of the assured message at the receiving party, the receiving party sends a receipt to the intermediate party and the intermediate party comprises an assured receipt sender which adds the assurance received from the receiving party's assuror to the receipt to form an assured receipt and sends the assured receipt to the sending party.

**42.** Apparatus according to claim 33, wherein the intermediate party further includes means for requesting the identity of the receiving party's assuror and sending an assurance request to the receiving party assuror on receipt of that identity.

**43.** Apparatus for sending an assured electronic message from a sending party to a receiving party, comprising: an intermediate party, wherein the sending party comprises a message sender for sending a signed message to an intermediate party; the intermediate party comprising:
an assuror identifier for establishing the identity of a receiving party assuror;
an assurance requester for sending an assurance request to a sending party assuror and the receiving party assuror;
an assured message sender which on receipt of an assurance from each of the sending party assuror and receiving party assuror, sends an assured message from the intermediate party to the receiving party; and
an assured receipt sender for sending an assured receipt from the intermediate party to the sending party after the assured message has been received by the receiving party.

**44.** Apparatus according to claim 43, wherein the intermediate party further comprises;
a logger for logging the signed message;
a timestamper for attaching a timestamp to the signed message;
a referencer for attaching a reference to the signed message; and
a verifier for verifying the signature.

**45.** Apparatus according to claim 44, wherein the assuror identifier comprises means for sending an assuror identity request from the intermediate party to the receiving party.

**46.** Apparatus according to claim 45, wherein the message is encrypted using public/private key encryption, further comprising a certificate requestor for requesting the receiving party's certificate when the assuror identity request is sent.

**47.** Apparatus for providing on-line notarisation for electronic messages sent from a sending party to a receiving party, comprising: at an intermediate party;
a message sender for sending a message from the sending party to the intermediate party;
a logger for logging receipt of the message at the intermediate party;
a timestamper for applying a timestamp to the message;
a referencer for assigning a reference to the message;
an assurance obtainer for obtaining an assurance from a sending party assuror at the intermediate party; and
an assured message sender for sending, on receipt of the assurance, an assured message from the intermediate party to the receiving party.

**48.** Apparatus according to claim 47, further comprising:
a receipt sender for sending a receipt from the receiving party to the intermediate party on receipt of the assured message at the receiving party;
a logger for logging the receipt at the intermediate party; and
an assured receipt sender for sending an assured receipt to the sending party.

**49.** An intermediate agent for use in a system for sending an electronic message from a sending party to a receiving party, the message being received by the sending party with an assurance, the system including the sending party, the receiving party, and a sending party assuror; wherein the intermediate agent is arranged to communicate with the sending party, the receiving party and the sending party assuror and comprises:
means for obtaining an assurance relating to the sending party from the sending party assuror; and
means for sending the received message as an assured message to the receiving party.

**50.** An intermediate agent according to claim 49, wherein the system further comprises: a receiving party assuror; and the intermediate agent further comprises means for obtaining an assurance relating to the receiving party from the receiving party assuror.

**51.** An intermediate agent according to claim 50, further comprising means for receiving a receipt from the receiving party when the receiving party has received an assured message; and means for sending the receipt as an assured receipt to the sending party.
